# EUROPEAN PATENT SPECIFICATION

(11) **EP 1 704 026 B1**
(45) Date of publication and mention of the grant of the patent: **21.05.2008**
(21) Application number: 05705427.2
(22) Date of filing: 14.01.2005
(51) Int. Cl.: B26B 21/60

(54) **METHOD OF TREATING RAZOR BLADE CUTTING EDGES**
VERFAHREN ZUR BEHANDLUNG VON RASIERKLINGEN-SCHNEIDKANTEN
PROCEDE POUR TRAITER LES TRANCHANTS D'UNE LAME DE RASOIR

(30) Priority: 15.01.2004 US 536953 P; 11.01.2005 US 33181
(43) Date of publication of application: 27.09.2006
(73) Proprietor: The Gillette Company, Boston, Massachusetts 02199 (US)
(72) Inventor: TRANKIEM, Hoang, Mai, Boston, MA 02111 (US)
(74) Representative: Clarkson, Paul Magnus
(86) International application number: PCT/US2005/000759
(87) International publication number: WO 2005/070627

(56) References cited:
- US-A- 5 985 459

## Description

### TECHNICAL FIELD

This invention relates to razor blades, and more particularly to methods of treating razor blades.

### BACKGROUND

Razor blades are treated with a coating such as polytetrafluoroethylene (PTFE), sometimes referred to as "telomer," in order to reduce the cutting force required to use the razor blade. However, in many instances, the coating is applied too thick for optimal shaving comfort, especially during the first shave. The thick coating on the blade edge is pushed back during shaving, resulting in increased shave performance after the first shave. Accordingly, efforts have been directed towards reliably and reproducibly thinning the blade coating to simulate the effects of the "pushed back" coating.

In some instances, a portion of the coating is selectively removed using a solvent to provide a thin layer, which can improve the characteristics of the razor especially on the first shave. These methods are disclosed in U.S. Patent 5,985,459 to Kwiecien et al*.* This patent notes that thinning of the coating to a degree such that it is no longer visible in photomicrographs at 900 magnification still leaves a thin coating that has good cutting properties. It is suggested that the thickness of the layers may be such that it is chemically bonded.

### SUMMARY

The present invention relates to razor blade cutting edges that exhibit an improvement in the "first shave" cut. As discussed above, one method of thinning the blade coating is to use a solvent to remove a portion of the coating, leaving a thin uniform layer on the blade edge. The inventor has discovered that the inclusion of an antioxidant in the solvent solution provides improved thinning, as the antioxidant helps improve the stability of the solvent, which provides consistent thinning of the blade coating over the treatment of a large number of batches of blade edges.

In one aspect, the invention features a method of treating a polyfluorocarbon coated razor blade. The method includes contacting a polyfluorocarbon coated razor blade with a solution of a solvent and an antioxidant, thereby partially removing the polyfluorocarbon coating from the razor blade.

In some instances, the polyfluorocarbon includes polytetrafluoroethylene.

In some instances, the antioxidant includes a phenol moiety, for example the phenol moiety of formula I 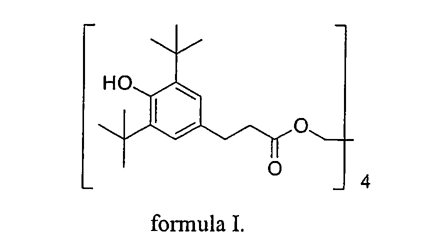 The antioxidant can include an organophosphorous moiety, for example, the organophosphorous moiety of formula II 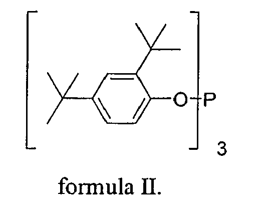 The antioxidant can include a lactone and/or a hydroxylamine. The concentration of antioxidant in the solvent can be less than about 0.1% (e.g., less than about 0.05% or less than about 0.01 %). The antioxidant can be stable at a temperature greater than or equal to the boiling point of the solvent.

In some instances, the solvent includes at least one of a perfluoroalkane, perfluorocycloalkane, perfluoroaromatic or an oligomer thereof (e.g., dodecafluorocyclohexane, octafluoronapthalene, perfluorotetracosane, perfluorotetradecahydrophenanthrene, isomers of perfluoroperhydrobenzylnaphthalene, erfluorotetradecahydrophenanthrene, high-boiling oligomeric byproduct in the manufacture of perfluorotetradecahydrophenanthrene, or perfluoropolyethers). In some instances, the solvent includes perfluoroperhydrophenanthrene oligomer having the general formula C₁₄F₂₃(C₁₄F₂₂)ₙC₁₄F₂₃ wherein n is 0, 1, or 2, or perfluorotetradecahydrophenanthrene. In some instances, solvent includes a plurality of antioxidants.

In some instances, the method also includes removing the solvent subsequent to contact with the razor blade. The solvent can be removed, for example, by dipping the blade in a wash solution. The temperature of the wash solution can be near the boiling point of the wash solution. In some instances, the wash solution includes perfluoro (2-n-butylhydrofuran). In some instances, the boiling point of the solvent is greater than the dissolution temperature for the polyfluorocarbon in the solvent. For example, the razor blade can be treated with solvent at a temperature below the boiling point of the solvent but greater than or equal to the dissolution temperature for the polyfluorocarbon in the solvent. Alternatively, the razor blade can be treated with solvent at a temperature above the boiling point of the solvent and greater than or equal to the dissolution temperature for the polyfluorocarbon in the solvent.

In some instances, the razor blade is coated with a polyfluorocarbon by applying a dispersion of the polyfluorocarbon onto the razor blade and subsequently heating the dispersion to a temperature sufficient to adhere the polyfluorocarbon to the razor blade. The dispersion can be applied onto the razor blade, for example, by spraying the dispersion onto the razor blade or by dipping the razor blade into the dispersion.

In some instances, the razor blade includes a cutting edge and the cutting edge is coated with a polyfluorocarbon.

In some instances, the method includes filtering the solution.

In some instance, the method includes contacting the polyfluorocarbon coated razor blade with a plurality of antioxidants. The antioxidants can include, for example, a phenyl containing moiety and an organophosphorous containing moiety. Examples of such antioxidants include the antioxidants of formulas I and II 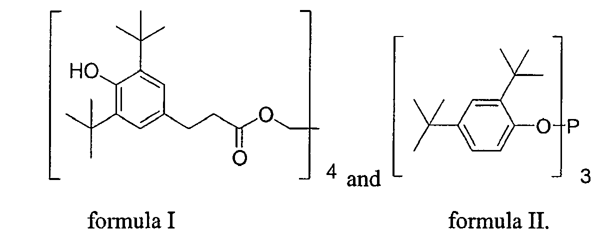 In some instances, the antioxidants of formula I and formula II are present in the ratio of 1/2.

In some instances, the temperature of the solution is between about 200 and 400 °C (e.g., between about 250 and about 350 °C, between about 260 and about 300 °C, or about 280 °C.

In some instances, the solution is subjected to a pressure of between about 0.21 - 0.83 MPa (30 and 120 psi), (e.g., between about 0.28-0.41 MPa (40 and 60 psi)).

In another aspect, the invention features a method of treating a polyfluorocarbon coated razor blade that includes contacting a polyfluorocarbon coated razor blade with a solution of a perfluoroperhydrophenanthrene and a 1/2 ratio of the compounds of formula I and formula II

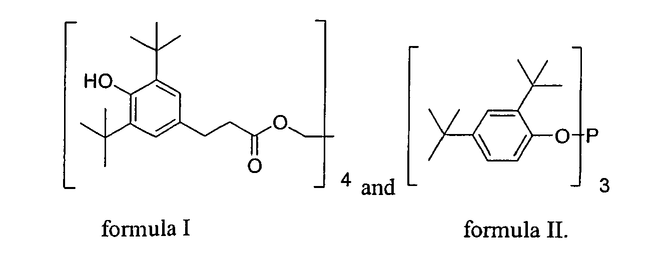

The details of one or more embodiments of the invention are set forth in the accompanying drawings and the description below. Other features and advantages of the invention will be apparent from the description and drawings, and from the claims.

### DESCRIPTION OF DRAWINGS

FIG. 1 is a photomicrograph of a polyfluorocarbon treated razor blade edge prior to treatment with an antioxidant containing solvent.
FIGs. 2 and 3 are photomicrographs of the polyfluorocarbon treated razor blade edge after treatment with an antioxidant containing solvent.

### DETAILED DESCRIPTION

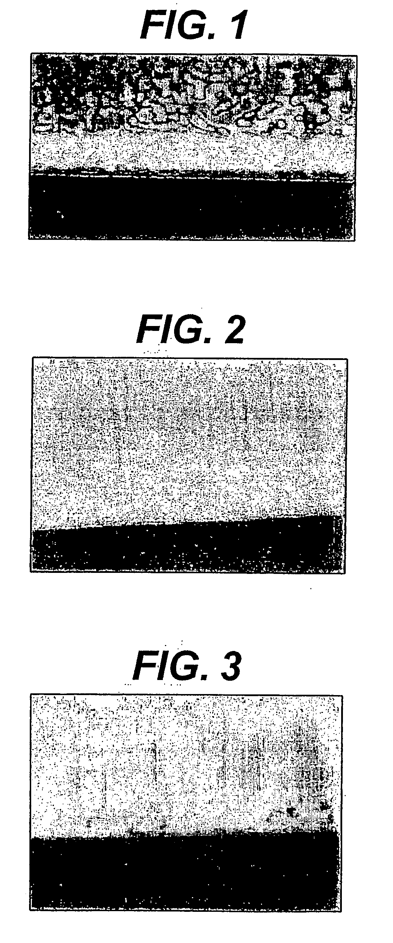

Methods of coating razor blade edges with polyfluorocarbons are known in the art and are disclosed, for example, in U.S. Patent No. 5,263,256 to Trankiem. However, these methods generally produce a blade having a relatively thick initial coating of polymer. (See Fig. 1.) This can result in disproportionately high cutting force during the first shave. One method for improving the first shave characteristics is to thin the polymer coating, for example using a solvent to remove a substantial portion of the coating. As discussed above, this method is disclosed in U.S. Patent No. 5,985,459, the complete disclosure of which is incorporated herein by reference.

The inventor has discovered that the addition of an antioxidant to the solvent improves the reproducibility of these methods of thinning the polyfluorocarbon coating. The lubricity of the telomer coating depends, in part, on the molecular weight of the polymer, so it is desirable to use different molecular weights depending on the desired lubricity for a particular application (e.g., a men's razor blade versus a woman's razor blade). Additionlly, the lubricity of the telomer coating can be affected by the hard coating of the razor blade. Addition of the antioxidant improves the reproducibility of the processing conditions regardless of the molecular weight of the telomer and the hard coating of the razor blade.

### Methods of treating a coated blade:

A blade coated with a polyfluorocarbon is treated with a suitable solvent and an antioxidant (or a plurality of antioxidants) to remove excess polyfluorocarbon from the blade edge, thus providing a thin polyfluorocarbon layer. (See Figs. 2 and 3.) The blade is coated and solvent treated as described in U.S. Patent No. 5,985,459. Suitable solvents and process parameters will be discussed in detail below.

The antioxidant can include a phenolic stabilizer, such as in Irganox B-215 (Supplier Ciba SpecialChem). Phenolic antioxidants are excellent hydrogen donors and are used in the industry to stabilize polymers. For examples, ROO* radicals are deactivated by hindered phenol via the following reaction: 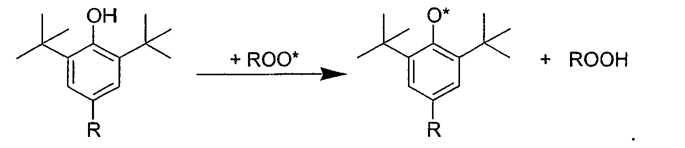 The phenoxy radical generated is very stable due to its ability to adopt numerous mesomeric forms. Examples of phenolic antioxidants are provided in Table 1 below:

**Table 1: Phenolic Antioxidants**

| | |
|---|---|
| 1 | 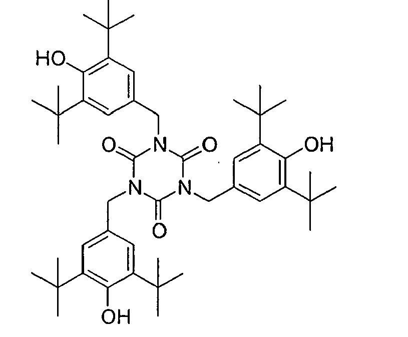 |
| 2 | 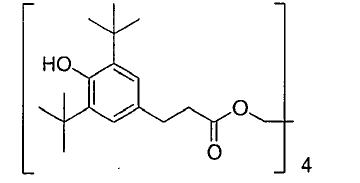 |
| 3 | 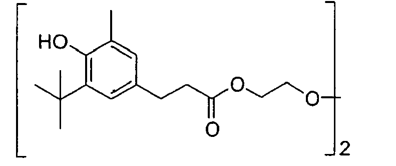 |
| 4 | 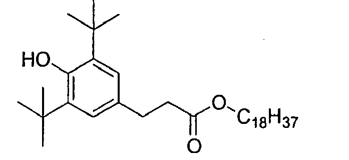 |
| 5 | 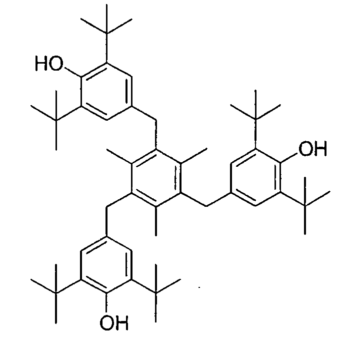 |
| 6 | 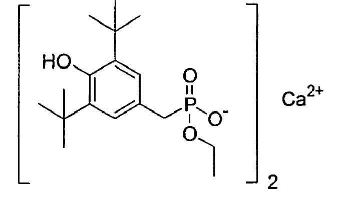 |
| 7 | 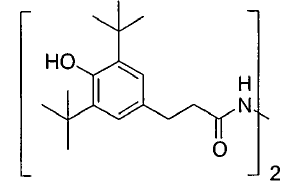 |
| 8 | 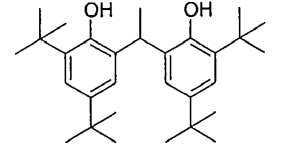 |
| 9 | 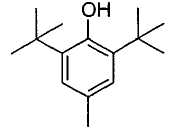 |
| 10 | 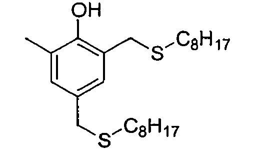 |
| 11 | 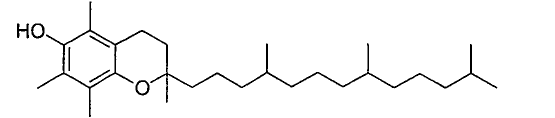 |
| 12 | 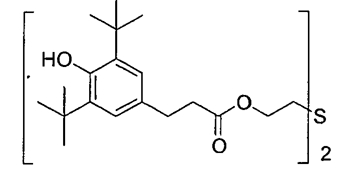 |

Alternatively or in addition to including a phenolic moiety, the antioxidant can include an organophosphorous compound. These compounds are useful in the decomposition of hydroperoxide and prevent the split of hydroperoxides into extremely reactive alkoxy and hydroxy radicals. Some examples of organophosphorous antioxidant compounds include those listed in Table 2 below.

**Table 2: Organophosphorous antioxidant compounds**

| | |
|---|---|
| 20 | 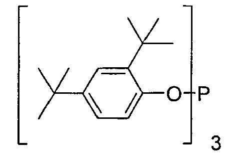 |
| 21 | 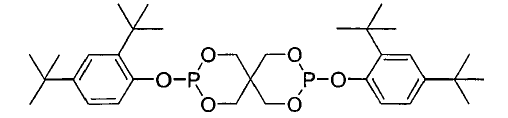 |
| 22 | 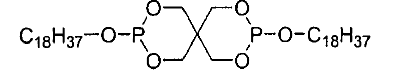 |
| 23 | 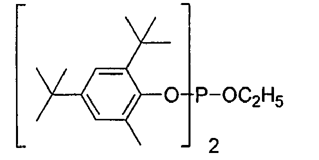 |
| 24 | 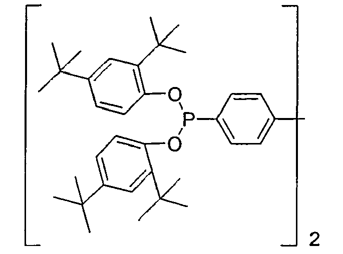 |
| 25 | 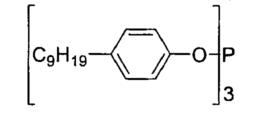 |
| 26 | 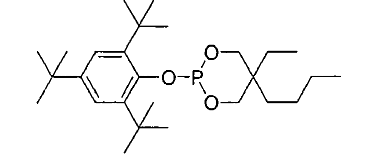 |
| 27 | 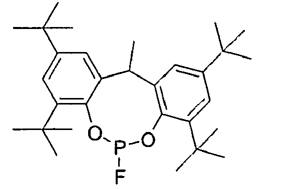 |
| 28 | 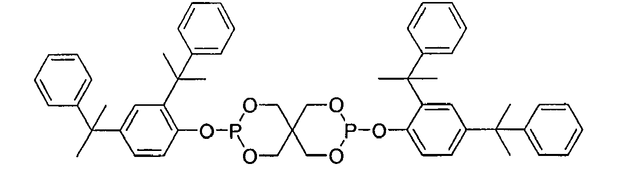 |
| 29 | 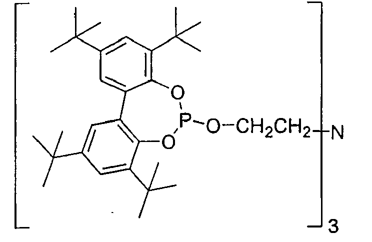 |

Lactones and hydroxylamine compounds can also be used as antioxidants. These compounds are particularly useful in scavenging alkyl radicals, thus inhibiting the autooxidation cycle. Under oxygen-deficient conditions alkyl radical scavengers contribute significantly to the stabilization of the polymer. In many instances lactone antioxidants are used in combination with phenolic antioxidants and phosphite antioxidants, thus providing high performance even at low concentrations. Some examples of lactone and hydroxylamine antioxidants include substituted benzofuranone and those shown in Table 3 below.

**Table 3: Benzofuranone and hydroxylamine antioxidants**

| | |
|---|---|
| 31 | 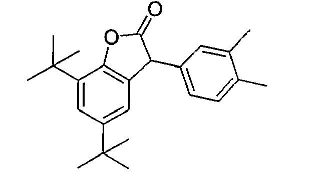 |
| 32 | 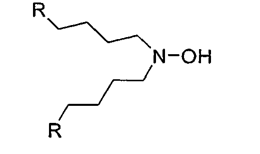 |

Generally the antioxidant is added to the solvent solution in an amount of less than about 1.0% by weight (e.g., less than about 0.5%, 0.4%, 0.3%, 0.2%, 0.1%, 0.05%, 0.04%, 0.03%, 0.02%, 0.01% or 0.005%).

The antioxidant is added to a solvent to provide an antioxidant/solvent solution. The solution is then generally filtered to remove large particles of antioxidant material, thus reducing the likelihood of damage to the razor blade edges that could be caused by large particles during stirring. In general, a coarse filter is used, filtering particles of about 30 microns in size. In some instances, the solution is flushed with a non-reactive gas such as argon or nitrogen gas prior to the addition of the coated razor blades into the solution.

In instances where the reaction is performed under inert atmospheric conditions the antioxidant can be added upon completion of the treatment, for example when the solvent solution is exposed to air.

The razor blades are then placed into the solution and stirred, thus removing a portion of the polyfluorocarbon coating.

The temperature and pressure of the treating conditions vary depending on the razor blade coating, the solvent, and the antioxidant. In some instances, the treatment is done at an elevated temperature. In some instance, the temperature is less than the boiling point of the solvent but higher than the dissolution temperature of the polyfluorocarbon. For example, the temperature can be above about 100 °C, above about 200 °C, or above about 300 °C. Generally the reaction temperature is below about 500 °C, below about 400 °C, or below about 300 °C. In instances where the temperature is below the boiling point of the solvent, the reaction conditions generally include atmospheric pressure.

In some instances, the temperature is at or above the boiling point of the solvent. In instances where the temperature is at or above the boiling point of the solvent, elevated pressure is generally used.

The process of solvent treating the polyfluorocarbon coated blade edge is carried out at the temperature required to dissolve the polymer, i.e. within the dissolution temperature range as defined above. In some instances, it is desirable to use increased pressure to reduce solvent loss. In these instances, the treatment of the razor blades is performed at increased pressures (e.g., from about 0.28-0.83 MPa (40 psi to about 120 psi)).

In general, the razors are treated in the solvent solution for less than about 30 minutes, for example, less than 25 minutes, or less than 20 minutes. In general, the razors are treated for more than about 1 second, for example more than about 5 seconds, 10, seconds, 30 seconds, 1 minute, 2 minutes, 5 minutes, about 10 minutes, or about 15 minutes. The reaction times are dependent on a variety of factors including but not limited to the solvent, temperature, pressure, and number of blades.

Generally, antioxidant/solvent combinations are chosen where the antioxidant is stable at either the boiling point of the solvent or the dissolution temperature of the polymer coating in the solvent. The boiling point of the solvent and dissolution temperature of the polymer coating in the solvent can change with pressure. Accordingly, the ability to use increased pressure is also considered when choosing an antioxidant/solvent combination.

Examples of desirable solvent properties are provided below:

### (1) Polyfluorocarbon-solvency

Melting point depression is used to identify solvency. Polymer melting points and melting depressions in solvents are measured in a Seiko Instrument DSC-220 Differential Scanning Calorimeter (DSC), at a heating rate of 10 °C/min in nitrogen. The melting point is the minimum peak of the melting endotherm. Melting depression studies use approximately 5 mg of PTFE/solvent in hermetic aluminum or stainless steel pans or glass ampoules. Liquids which exhibit a PTFE melting point depression are considered to be solvents. The melting point depression establishes the lower range of dissolution temperatures.

### (2) Solvent compatibility at the dissolution temperature of the polyfluorocarbon

In some instances, the solvent is a liquid at the dissolution temperature. In other words, the solvent has a boiling point above the processing temperature and a melting point below the dissolution temperature. Of course, these physical properties can be manipulated by changing the processing pressures. While increased pressures are useful and can be used in manufacturing processes, using a solvent that is a liquid at dissolution temperature at ambient pressure eliminates the need to use high pressure equipment, and therefore can, in some instances, reduce the processing costs of the procedure. In cases where higher pressure is used, the solvent generally has a critical temperature above the processing temperature.

### (3) Low polarity

Molecules with low or, most preferably, no polar functionality are most commonly used in the disclosed methods. These molecules, for example, include nonpolar aliphatic, cyclic, or aromatic perfluorocarbons; however, low molecular weight (LMW), fluorine-end-capped homopolymers of hexafluoropropylene epoxide also can be employed.

The solvent, antioxidant, and polymer should be stable at the processing temperature. Agitation will increase the rate of dissolution of the polymer along the blade edge. Two other factors influence the rate of dissolution: (1) higher interfacial surface area between the polymer and solvent gives faster rates, and (2) higher polymer molecular weight and higher polymer concentrations give slower rates of dissolution. The time required for dissolution will vary with the particular polymer and solvent chosen, as well as with the other factors discussed above including antioxidant. Specific examples of the solvent treatment appear in the examples.

Examples of solvents include perfluoroalkanes, perfluorocycloalkanes, perfluoro aromatic compounds and oligomers thereof. Many perfluoropolyethers (PFPE) work in some cases. As used herein, "perfluorocycloalkanes" refers to saturated cyclic compounds, which may contain fused or unfused rings. In addition, the perfluorinated cycloalkane may be substituted by perfluoroalkyl and perfluoroalkylene groups. By "perfluoroalkyl group" we mean a saturated branched or linear carbon chain.

Saturated perfluorocarbons with aliphatic ring structures and high critical temperatures generally provide solubility of PTFE at the lowest temperatures and pressures. Perfluorinated solvents can be obtained, for example, from PCR, Inc., of Gainesville, Fla. Dodecafluorocyclohexane (C₆F₁₂), octafluoronaphthalene (C₁₀F₈), and perfluorotetracosane (n-C₂₄F₅₀) may be obtained from the Aldrich Chemical Co. Perfluorotetradecahydrophenanthrene (C₁₄F₂₄), commonly called perfluoroperhydrophenanthrene, may be obtained from F2 Chemicals, Preston Lancashire, England under the tradename Flutec PP11. A mixture of isomers of perfluoroperhydrobenzylnaphthalene (Cl₇F₃₀), with the tradename Flutec PP25, may be obtained from F2 Chemicals, Preston Lancashire, England. A high-boiling oligomeric byproduct in the manufacture of Flutec PP11 (C₁₄F₂₃ (C₁₄F₂₂)ₙC₁₄ F₁₂ where n=0,1 and 2) may be also obtained from DuPont, which is a gross mixture of perfluorocarbons. The approximate boiling range of the components is 280-400 °C. When dissolving MP1100, MP1600, LW1200 or Vydax brand PTFE off blade edges, temperatures between 270-340 °C for about 10-200 seconds are generally used.

As used herein, perfluoropolyethers (PFPE) refer to perfluorinated compounds containing the -(CF₂-CFR-O-)ₙ linkage where R=F, CF₃. These compounds are sometimes called perfluoroalkylether (PFAE) or perfluoropolyalkylether (PFPAE). Preferably, the polymer chain is completely saturated and contains only the elements carbon, oxygen, and fluorine; hydrogen is not present.

The effectiveness of a thinning process can be determined, for example, using a wool felt cutter test, which measures the cutter forces of the blade by measuring the force required by each blade to cut through a wool felt. The cutter forces of a blade can change over time, for example as the blade wears or as the coating on the blade is removed. Accordingly, the blade is run through the wool felt cutter 500 times and the force of each cut is measured on a recorder.

In some instances, after a blade has been solvent treated, the blade is subjected to further processing to remove any excess solvent. This can be done by dipping the blade edge into a wash solution for the solvent.

Generally the blades are washed at a temperature near the boiling point of the wash solution. Fluorinert FC-75 brand perfluoro (2-n-butyl hydrofuran) solvent, manufactured by 3M, and HFC-43 brand 1,1,1,2,3,4,4,5,5,5,-decafluoropentane, manufactured by DuPont, are both useful wash solutions.

Generally the wash solution is easily separable from the solvent to allow the wash solution to be reused. Removing dissolved polyfluorocarbon (e.g., PTFE) from the solvent allows the solvent and/or the PTFE to be reused. The separation of the polyfluorocarbon and the solvent can be accomplished by distillation or other methods known to those of skill in the art.

All percentages and ratios described herein are on a weight basis unless otherwise indicated.

As used herein the term "razor blade cutting edge" includes the cutting point and facets of the blade. Applicant recognizes that the entire blade could be coated in the manner described herein; however; an enveloping coat of the type is not believed to be essential to the present invention. Razor blades according to the present invention include all types known in the art. For example, stainless steel blades are commonly used. Many other commercial razor blades also include a chromium/platinum interlayer between the steel blade and the polymer. This type of interlayer is sputtered onto the blade edge surface prior to polymer coating. Furthermore, the blade material can be coated with a Diamond Like Carbon (DLC) coating as described in U.S. Pat. Nos. 5,142, 785 and 5,232,568 prior to polymer coating.

### Coating the blade

A polyfluorocarbon-coated blade edge can be prepared by any process known in the art. For example, the blade edge can be coated with a polyfluorocarbon dispersion. The coated blade is then heated to drive off the dispersing media and sinter the polyfluorocarbon onto the blade edge.

Examples of polyfluorocarbons include MP1100, MP1200, MP1600, and LW1200 brand polytetrafluoroethylene powders manufactured by DuPont.

Polyfluorocarbon dispersions generally include from 0.05 to 5% (wt) polyfluorocarbon, preferably from 0.7 to 1.2% (wt), dispersed in a dispersant media. The polymer can be introduced into the flow stream or mixed directly into an agitated reservoir and then homogenized. When injected into the flow stream, a static mixer downstream is generally used.

Dispersing medium generally includes one or more of a fluorocarbon (e.g. Freon brand from DuPont), water, a volatile organic compounds (e.g. isopropyl alcohol), or a supercritical CO₂.

The dispersion can be applied to the cutting edge in any suitable manner, as for example, by dipping or spraying the dispersion onto the blade edge. Where nebulization is used, an electrostatic field can be employed in conjunction with the nebulizer in order to increase the efficiency of deposition. The coating is generally heated upon application to provide improved adhesion.

### EXAMPLES

### Example 1:

Approximately 1500 blades coated with LW-1200 were stacked at an end of a modified stirring shaft of a 350 ml Parr 4560 Mini-reactor (the washer). The washer was then filled with 2/3 of Flutec PP11 solvent plus IRGANOX B-215 (0.01 %) antioxidant. Argon was flushed through a syringe for 5 minutes at the flow rate of 22 scfh. The entire apparatus was closed and Argon was flushed via the gas outlet of the bomb for additional 5 minutes. The washer was then sealed and heated until it reached 250 °C. The stirring shaft was started and rotated at 80 rev/min until the temperature reached 273 °C. The temperature was then maintained at 273 °C for about 90 seconds. At this time, pressure in the chamber reached 0.28-0.41 MPa (40-60 psi). Heating was stopped and air cooling was introduced to cool down the washer. Stirring was then stopped when the temperature reached 260 °C. Blades were removed when tempeature was around 60 °C.

### Example 2:

A solution of antioxidant (IRGANOX B-215) and solvent (FLUTEC PP11) was added to a pressure vessel (filling about half full). The solution was then flushed with either Nitrogen for about 5 minutes. After the solution was flushed, a spindle of PTFE-coated razor blades was inserted into the pressure vessel, submerging the razor blades in the antioxidant/solvent solution. The solution was again flushed with Nitrogen or Argon for about 3 minutes. The pressure vessel was then sealed, and the pressure was increased to about 0.28 MPa (40 psi). The temperature of the solvent was increased to about 280 °C while stirring the spindle of coated razor blades. The blades were stirred for less than about 2 minutes. Upon completion, the temperature in the reaction vessel was cooled and the pressure subsequently released. In some instances, the blades were further subjected to a wash step to remove any remaining solvent.

Table 4 below depicts the cutter forces of three razor blades for the first cut, the 5^{th} cut, and the 500^{th} cut. The razor blades are described using three different hard coating materials A, B, and C. As can be seen, the razor blades treated with the Flutec™ solvent and the antioxidant IRGANOX B-215 have more consistent first and fifth cutter forces than the razor blades treated with Flutec™ solvent alone. Moreover, consistently lower L₅₀₀ values were observed on all coatings when the antioxidant was added, making the use of the Flutec™ solvent with antioxidant more reproducible than the use of Flutec™ solvent alone. Without wishing to be bound by theory, it is believed that the antioxidant improves the stability of the solvent, which improves the reproducibility of the blade thinning. Accordingly, the use of antioxidant provides an improved manufacturing method as the combination allows greater consistency and reproducibility among the various razor blades.

**Table 4: Comparison of Razor Blades Treated With Flutec™ solvent With and Without Antioxidant**

| Flutec with Antioxidant improves the cutter forces of blades having various coatings | | | | | | |
|---|---|---|---|---|---|---|
| Hard Coating | Flutec™ solvent without antioxidant | | | Flutec™ solvent with antioxidant* | | |
| | 1^{st} Cut | L_{5, lb} | **L_{500,lb} | 1^{st} Cut | L_{5,lb} | L_{500,lb} |
| A | 1.51 | 1.37 | 1.92 | 1.02 | 1.08 | 1.21 |
| B | 1.1 | 1.08 | 1.64 | 1.06 | 1.08 | 1.42 |
| C | 0.97 | 0.95 | 1.75 | 1.06 | 1.07 | 1.42 |

| | | | | | | |
|---|---|---|---|---|---|---|
| *Irganox B-215 antioxidant ** L_{500, lb} is an average of cutter forces between the 500^{th} and 505^{th} cut. | | | | | | |

A number of embodiments of the invention have been described. Nevertheless, it will be understood that various modifications may be made without departing from the scope of the invention. Accordingly, other embodiments are within the scope of the following claims.

## Claims

1. A method of treating a polyfluorocarbon coated razor blade, comprising:
contacting a polyfluorocarbon coated razor blade with a solution of a solvent and an antioxidant, thereby partially removing the polyfluorocarbon coating from the razor blade.

2. The method of claim 1 wherein the polyfluorocarbon comprises polytetrafluoroethylene.

3. The method of claim 1 wherein the antioxidant comprises a phenol moiety.

4. The method of claim 3 wherein the phenol moiety comprises a compound of formula I

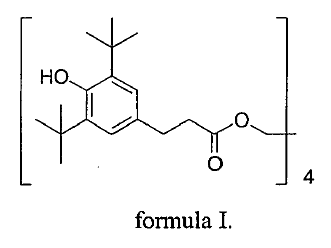

5. The method of claim 1 wherein the antioxidant comprises an organophosphorous moiety.

6. The method of claim 5 wherein the organophosphorous moiety comprises a compound of formula II

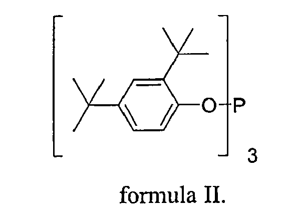

7. The method of claim 1 wherein the antioxidant comprises a lactone, a hydroxylamine, or a combination thereof.

8. The method of claim 1 wherein the concentration of antioxidant in the solvent is less than 0.1%.

9. The method of claim 8 wherein the concentration of antioxidant in the solvent is less than 0.05%.

10. The method of claim 9 wherein the concentration of antioxidant in the solvent is less than 0.01%.

11. The method of claim 1 wherein the antioxidant is stable at a temperature greater than or equal to the boiling point of the solvent.

12. The method of claim 1 wherein the solvent comprises at least one of a perfluoroalkane, perfluorocycloalkane, perfluoroaromatic or an oligomer thereof.

13. The method of claim 12 wherein the solvent comprises at least one of dodecafluorocyclohexane, octafluoronapthalene, perfluorotetracosane, perfluorotetradecahydrophenanthrene, isomers of perfluoroperhydrobenzylnaphthalene, erfluorotetradecahydrophenanthrene, high-boiling oligomeric byproduct in the manufacture of perfluorotetradecahydrophenanthrene, or perfluoropolyethers.

14. The method of claim 13 wherein the solvent comprises a perfluoroperhydrophenanthrene oligomer having the general formula C₁₄F₂₃(C₁₄F₂₂)ₙC₁₄F₂₃ wherein n is 0, 1, or 2.

15. The method of claim 13 wherein the solvent comprises perfluorotetradecahydrophenanthrene.

16. The method of claim 14 wherein the solvent further comprises a plurality of antioxidants.

17. The method of claim 1 further comprising removing the solvent subsequent to contact with the razor blade.

18. The method of claim 17 wherein the solvent is removed by dipping the blade in a wash solution.

19. The method of claim 17 wherein, wherein the temperature of the wash solution is near the boiling point of the wash solution.

20. The method of claim 17 wherein the wash solution comprises perfluoro (2-n-butylhydrofuran).

21. The method of claim 1 wherein the boiling point of the solvent is greater than the dissolution temperature for the polyfluorocarbon in the solvent.

22. The method of claim 21 wherein the razor blade is treated with solvent at a temperature below the boiling point of the solvent but greater than or equal to the dissolution temperature for the polyfluorocarbon in the solvent.

23. The method of claim 21 wherein the razor blade is treated with solvent at a temperature above the boiling point of the solvent and greater than or equal to the dissolution temperature for the polyfluorocarbon in the solvent.

24. The method of claim 1, wherein the razor blade is coated with a polyfluorocarbon by applying a dispersion of the polyfluorocarbon onto the razor blade and subsequently heating the dispersion to a temperature sufficient to adhere the polyfluorocarbon to the razor blade.

25. The method of claim 24, wherein the dispersion is applied onto the razor blade by spraying the dispersion onto the razor blade.

26. The method of claim 24, wherein the dispersion is applied onto the razor blade by dipping the razor blade into the dispersion.

27. The method of claim 1, wherein razor blade comprises a cutting edge and the cutting edge is coated with a polyfluorocarbon.

28. The method of claim 1 further comprising filtering the solution.

29. The method of claim 1 comprising contacting the polyfluorocarbon coated razor blade with a plurality of antioxidants.

30. The method of claim 29 wherein the antioxidants comprise a phenyl moiety and an organophosphorous moiety.

31. The method of claim 30 wherein the antioxidants comprise

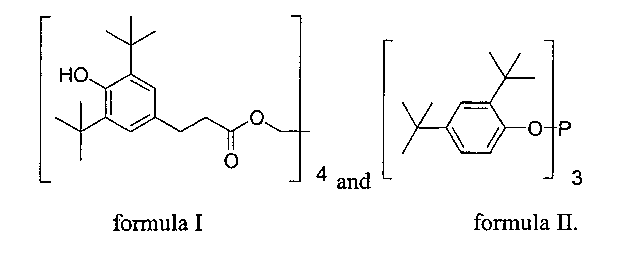

32. The method of claim 31 wherein the ratio of formula I/formula II is 1/2.

33. The method of claim 1 wherein the temperature of the solution is between 200 and 400 °C.

34. The method of claim 33 wherein the temperature of the solution is between 250 and 350 °C.

35. The method of claim 33 wherein the temperature of the solution is between 260 and 300 °C.

36. The method of claim 33 wherein the temperature of the solution is 280 °C.

37. The method of claim 1 wherein the solution is subjected to a pressure of between 0.21 and 0.83 MPa (30 and 120 psi).

38. The method of claim 37 wherein the solution is subjected to a pressure of between 0.28 and 0.41 MPa (40 and 60 psi).

39. A method of treating a polyfluorocarbon coated razor blade, comprising:
contacting a polyfluorocarbon coated razor blade with a solution of a perfluoroperhydrophenanthrene and a 1/2 ratio of the compounds of formula I and formula II

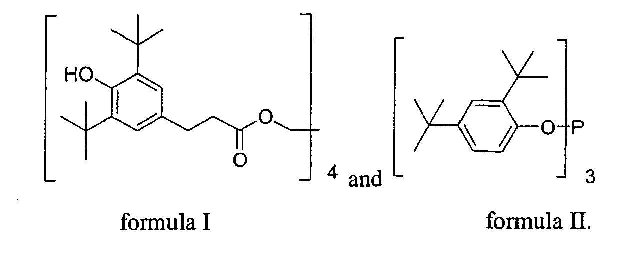

## Patentansprüche

1. Verfahren zum Behandeln einer Polyfluorcarbon-beschichteten Rasierklinge, aufweisend:
Kontaktieren einer Polyfluorcarbon-beschichteten Rasierklinge mit einer Lösung eines Lösungsmittels und eines Antioxidants, wobei **dadurch** teilweise die Polyfluorcarbon-Beschichtung von der Rasierklinge entfernt wird.

2. Verfahren nach Anspruch 1, bei welchem das Polyfluorcarbon Polytetrafluorethylen aufweist.

3. Verfahren nach Anspruch 1, bei welchem das Antioxidants einen Phenolrest aufweist.

4. Verfahren nach Anspruch 3, bei welchem der Phenolrest eine Verbindung der Formel aufweist.

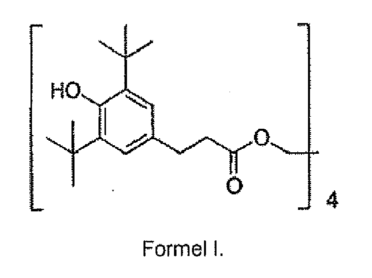

5. Verfahren nach Anspruch 1, bei welchem das Antioxidants einen Organophosphorrest aufweist.

6. Verfahren nach Anspruch 5, bei welchem der Organophosphorrest eine Verbindung der Formel II aufweist

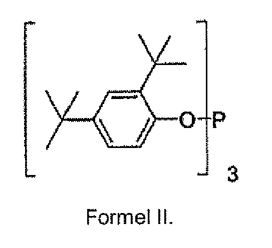

7. Verfahren nach Anspruch 1, bei welchem das Antioxdants ein Lacton, ein Hydroxylamin oder eine Kombination davon aufweist.

8. Verfahren nach Anspruch 1, bei welchem die Konzentration des Antioxidants im Lösungsmittel weniger als 0,1 % ist.

9. Verfahren nach Anspruch 8, bei welchem die Konzentration des Antioxidants im Lösungsmittel weniger als 0,05 % ist.

10. Verfahren nach Anspruch 9, bei welchem die Konzentration des Antioxidants im Lösungsmittel weniger als 0,01 % ist.

11. Verfahren nach Anspruch 1, bei welchem das Antioxidants stabil bei einer Temperatur größer als oder gleich dem Siedepunkt des Lösungsmittels ist.

12. Verfahren nach Anspruch 1, bei welchem das Lösungsmittel zumindest eines von einem Perfluoralkan, einem Perfluorcycloalkan, einem Perfluoraromaten oder einem Oligomer davon umfasst.

13. Verfahren nach Anspruch 12, bei welchem das Lösungsmittel zumindest eines von Dodecafluorcyclohexan, Octafluornaphthalin, Perfluortetracosan, Perfluortetradecahydrophenathren, lsomeren von Perfluorperhydrobenzylnaphthalin, Perfluoretradecahydrophenathren, hochsiedenden oligomeren Nebenprodukten in der Herstellung von Perfluortetradecahydrophenathren, oder Perfluorpolyethern umfasst.

14. Verfahren nach Anspruch 13, bei welchem das Lösungsmittel ein Perfluorperhydrophenanthren-Oligomer mit der allgemeinen Formel C₁₄F₂₃(C₁₄F₂₂)ₙC₁₄F₂₃, wobei n 0,1 oder 2 ist, aufweist.

15. Verfahren nach Anspruch 13, bei welchem das Lösungsmittel Perfluortetradecahydrophenanthren aufweist.

16. Verfahren nach Anspruch 14, bei welchem das Lösungsmittel ferner eine Mehrzahl von Antioxidantien aufweist.

17. Verfahren nach Anspruch 1, ferner umfassend das Entfernen des Lösungsmittels folgend auf den Kontakt mit der Rasierklinge.

18. Verfahren nach Anspruch 17, bei welchem das Lösungsmittel entfernt wird durch Eintauchen der Klinge in eine Waschlösung.

19. Verfahren nach Anspruch 17, bei welchem die Temperatur der Waschlösung nahe dem Siedepunkt der Waschlösung ist.

20. Verfahren nach Anspruch 17, bei welchem die Waschlösung Perfluor-(2-n-buthylhydrofuran) aufweist.

21. Verfahren nach Anspruch 1, bei welchem der Siedepunkt des Lösungsmittels größer als die Lösungstemperatur für das Polyfluorcarbon im Lösungsmittel ist.

22. Verfahren nach Anspruch 21, bei welchem die Rasierklinge mit Lösungsmittel bei einer Temperatur unterhalb des Siedepunkts des Lösungsmittels, jedoch größer als oder gleich der Lösungstemperatur für das Polyfluorcarbon im Lösungsmittel, behandelt wird.

23. Verfahren nach Anspruch 21, bei welchem die Rasierklinge mit Lösungsmittel bei einer Temperatur oberhalb des Siedepunkts des Lösungsmittels und größer als oder gleich der Lösungstemperatur für das Polyfluorcarbon im Lösungsmittel behandelt wird.

24. Verfahren nach Anspruch 1, bei welchem die Rasierklinge mit einem Polyfluorcarbon beschichtet wird durch Aufbringen einer Dispersion des Polyfluorcarbons auf die Rasierklinge und anschließendes Erwärmen der Dispersion auf eine Temperatur, ausreichend, um das Polyfluorcarbon an die Rasierklinge anzuhaften.

25. Verfahren nach Anspruch 24, bei welchem die Dispersion auf die Rasierklinge durch Sprühen der Dispersion auf die Rasierklinge aufgebracht wird.

26. Verfahren nach Anspruch 24, bei welchem die Dispersion auf die Rasierklinge durch Eintauchen der Rasierklinge in die Dispersion aufgebracht wird.

27. Verfahren nach Anspruch 1, bei welchem die Rasierklinge eine Schnittkante umfasst und die Schnittkante mit einem Polyfluorcarbon beschichtet ist.

28. Verfahren nach Anspruch 1, ferner umfassend Filtrieren der Lösung.

29. Verfahren nach Anspruch 1, umfassend das Kontaktieren der Polyfluorcarbon-beschichteten Rasierklinge mit einer Mehrzahl von Antioxidantien.

30. Verfahren nach Anspruch 29, bei welchem die Antioxidantien einen Phenylrest und einen Organophosphorrest aufweisen.

31. Verfahren nach Anspruch 30, bei welchem die Antioxidantien 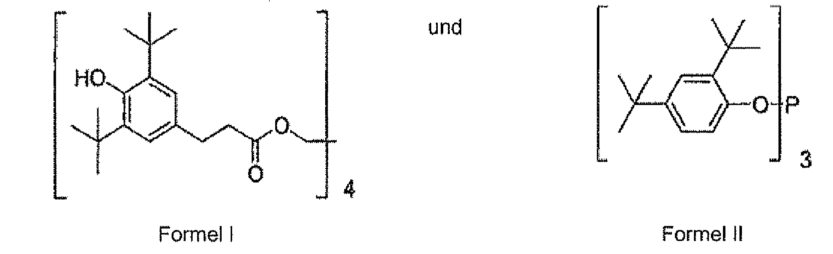 umfassen.

32. Verfahren nach Anspruch 31, bei welchem das Verhältnis von Formel I/Formel II 1/2 ist.

33. Verfahren nach Anspruch 1, bei welchem die Temperatur der Lösung zwischen 200 und 400 °C ist.

34. Verfahren nach Anspruch 33, bei welchem die Temperatur der Lösung zwischen 250 und 350 °C ist.

35. Verfahren nach Anspruch 33, bei welchem die Temperatur der Lösung zwischen 260 und 300 °C ist.

36. Verfahren nach Anspruch 33, bei welchem die Temperatur der Lösung 280 °C ist.

37. Verfahren nach Anspruch 1, bei welchem die Lösung einem Druck zwischen 0,21 und 0,83 MPa (30 und 120 psi) ausgesetzt wird.

38. Verfahren nach Anspruch 37, bei welchem die Lösung einen Druck zwischen 0,28 und 0,41 MPa (40 und 60 psi) ausgesetzt wird.

39. Verfahren zum Behandeln einer Polyfluorcarbon-beschichteten Rasierklinge, aufweisend:
Kontaktieren einer Polyfluorcarbon-beschichteten Rasierklinge mit einer Lösung von einem Perfluorperhydrophenanthren und einem 1/2-Verhältnis der Verbindungen von Formel I und Formel II

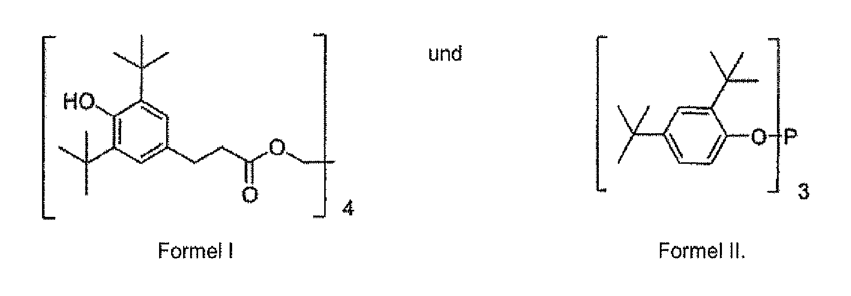

## Revendications

1. Procédé de traitement de lame de rasoir revêtue d'un polyfluorocarbure, comprenant :
la mise en contact d'une lame de rasoir revêtue d'un polyfluorocarbure avec une solution composée d'un solvant et d'un antioxydant, éliminant de ce fait partiellement le revêtement de polyfluorocarbure de la lame de rasoir.

2. Procédé selon la revendication 1, dans lequel le polyfluorocarbure comprend le polytétrafluoroéthylène.

3. Procédé selon la revendication 1, dans lequel l'antioxydant comprend un fragment phénol.

4. Procédé selon la revendication 3, dans lequel le fragment phénol comprend un composé répondant à la formule I

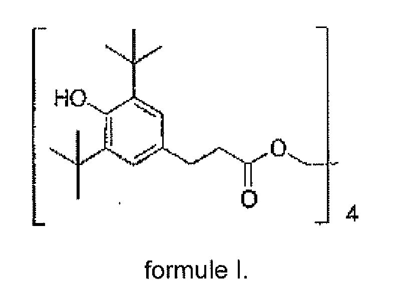

5. Procédé selon la revendication 1, dans lequel l'antioxydant comprend un fragment organophosphore.

6. Procédé selon la revendication 5, dans lequel le fragment organophosphore comprend un composé répondant à la formule II

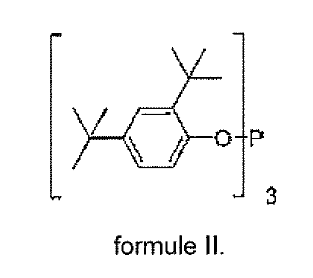

7. Procédé selon la revendication 1, dans lequel l'antioxydant comprend une lactone, une hydroxylamine ou une combinaison de celles-ci.

8. Procédé selon la revendication 1, dans lequel la concentration en antioxydant dans le solvant est inférieure à 0,1 %.

9. Procédé selon la revendication 8, dans lequel la concentration en antioxydant dans le solvant est inférieure à 0,05 %.

10. Procédé selon la revendication 9, dans lequel la concentration en antioxydant dans le solvant est inférieure à 0,01 %.

11. Procédé selon la revendication 1, dans lequel l'antioxydant est stable à une température supérieure ou égale à la température d'ébullition du solvant.

12. Procédé selon la revendication 1, dans lequel le solvant comprend au moins un composé parmi un perfluoroalcane, un perfluorocycloalcane, un composé perfluoroaromatique ou un oligomère de ceux-ci.

13. Procédé selon la revendication 12, dans lequel le solvant comprend au moins un composé parmi le dodécafluorocyclohexane, l'octafluoronaphtalène, le perfluorotétracosane, le perfluorotétradécahydrophénanthrène, des isomères du perfluoroperhydrobenzylnaphtalène, le perfluorotétradécahydrophénanthrène, un sous-produit oligomère à température d'ébullition élevée dans la fabrication du perfluorotétradécahydrophénanthrène ou des perfluoropolyéthers.

14. Procédé selon la revendication 13, dans lequel le solvant comprend un oligomère du perfluoroperhydrophénanthrène répondant à la formule générale C₁₄F₂₃(C₁₄F₂₂)ₙC₁₄F₂₃ dans laquelle n vaut 0, 1 ou 2.

15. Procédé selon la revendication 13, dans lequel le solvant comprend le perfluorotétradécahydrophénanthrène.

16. Procédé selon la revendication 14, dans lequel le solvant comprend en outre une pluralité d'antioxydants.

17. Procédé selon la revendication 1 comprenant en outre l'élimination du solvant après le contact avec la lame de rasoir.

18. Procédé selon la revendication 17, dans lequel le solvant est éliminé en plongeant la lame dans une solution de lavage.

19. Procédé selon la revendication 17, dans lequel la température de la solution de lavage est proche de la température d'ébullition de la solution de lavage.

20. Procédé selon la revendication 17, dans lequel la solution de lavage comprend le perfluoro(2-n-butylhydrofuranne).

21. Procédé selon la revendication 1, dans lequel la température d'ébullition du solvant est plus élevée que la température de dissolution du polyfluorocarbure dans le solvant.

22. Procédé selon la revendication 21, dans lequel la lame de rasoir est traitée avec un solvant à une température inférieure à la température d'ébullition du solvant mais supérieure ou égale à la température de dissolution du polyfluorocarbure dans le solvant.

23. Procédé selon la revendication 21, dans lequel la lame de rasoir est traitée avec un solvant à une température supérieure à la température d'ébullition du solvant et supérieure ou égale à la température de dissolution du polyfluorocarbure dans le solvant.

24. Procédé selon la revendication 1, dans lequel la lame de rasoir est revêtue d'un polyfluorocarbure en appliquant une dispersion du polyfluorocarbure sur la lame de rasoir et en chauffant par la suite la dispersion à une température suffisante pour faire adhérer le polyfluorocarbure à la lame de rasoir.

25. Procédé selon la revendication 24, dans lequel la dispersion est appliquée sur la lame de rasoir en pulvérisant la dispersion sur la lame de rasoir.

26. Procédé selon la revendication 24, dans lequel la dispersion est appliquée sur la lame de rasoir en plongeant la lame de rasoir dans la dispersion.

27. Procédé selon la revendication 1, dans lequel la lame de rasoir comprend un bord coupant et ce dernier est revêtu d'un polyfluorocarbure.

28. Procédé selon la revendication 1 comprenant en outre la filtration de la solution.

29. Procédé selon la revendication 1 comprenant la mise en contact de la lame de rasoir revêtue de polyfluorocarbure avec une pluralité d'antioxydants.

30. Procédé selon la revendication 29, dans lequel les antioxydants comprennent un fragment phényle et un fragment organophosphore.

31. Procédé selon la revendication 30, dans lequel les antioxydants comprennent

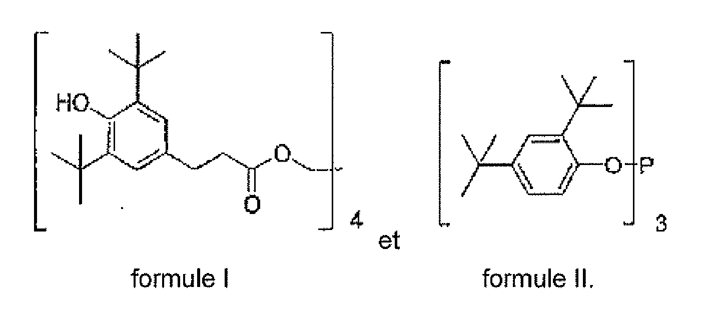

32. Procédé selon la revendication 31, dans lequel le rapport du composé répondant à la formule I sur le composé répondant à la formule II vaut 1/2.

33. Procédé selon la revendication 1, dans lequel la température de la solution est comprise entre 200 et 400 °C.

34. Procédé selon la revendication 33, dans lequel la température de la solution est comprise entre 250 et 350 °C.

35. Procédé selon la revendication 33, dans lequel la température de la solution est comprise entre 260 et 300 °C.

36. Procédé selon la revendication 33, dans lequel la température de la solution est de 280 °C.

37. Procédé selon la revendication 1, dans lequel la solution est soumise à une pression comprise entre 0,21 et 0,83 MPa (30 et 120 psi).

38. Procédé selon la revendication 37, dans lequel la solution est soumise à une pression comprise entre 0,28 et 0,41 MPa (40 et 60 psi).

39. Procédé de traitement d'une lame de rasoir revêtue de polyfluorocarbure, comprenant :
la mise en contact d'une lame de rasoir revêtue de polyfluorocarbure avec une solution d'un perfluoroperhydrophénanthrène avec un rapport de 1/2 entre les composés répondant à la formule 1 et à la formule II
